# FASCICULE DE BREVET EUROPEEN

(11) **EP 2 445 739 B1**
(45) Date de publication et mention de la délivrance du brevet: **02.08.2017**
(21) Numéro de dépôt: 10745298.9
(22) Date de dépôt: 22.06.2010
(51) Int. Cl.: B60W 30/18, F02N 5/00, F02N 7/00, F02N 7/08, B60K 6/12

(54) **DISPOSITIF MODULAIRE DE GENERATION DE PUISSANCE POUR VEHICULE**
MODULARE STROMERZEUGUNGSVORRICHTUNG FÜR EIN FAHRZEUG
MODULAR POWER-GENERATING DEVICE FOR A VEHICLE

(30) Priorité: 25.06.2009 FR 0903098; 25.08.2009 FR 0955796
(43) Date de publication de la demande: 02.05.2012
(73) Titulaire: Envision Vehicle Engineering Novasio Technology Event, 70400 Hericourt (FR)
(72) Inventeur: GAUSSIN, Christophe, CH-1093 La Conversion (CH); HECKY, Stéphane, F-90300 ELOIE (FR)
(74) Mandataire: Rhein, Alain
(86) Numéro de dépôt international: PCT/FR2010/051273
(87) Numéro de publication internationale: WO 2010/149929

(56) Documents cités:
- EP-A1- 0 244 549
- EP-A1- 0 543 390
- EP-A1- 1 329 351
- EP-A2- 0 825 410
- WO-A1-00/27662
- DE-U1- 9 308 802
- GB-A- 2 019 330
- GB-A- 2 189 754
- GB-A- 2 443 272

## Description

La présente invention concerne un dispositif modulaire de génération de puissance pour un véhicule, ledit dispositif comportant des moyens de guidage conçus aptes à coopérer avec des moyens de guidage complémentaires que comporte un véhicule.

La présente invention entre dans le domaine des véhicules à déplacement terrestre, et notamment le domaine des engins motorisés de forte puissance tels que véhicules de transport de type véhicules portuaires ou convois exceptionnels, engins de chantier, engins militaires tout terrain. Plus particulièrement, elle concerne le domaine de la maintenance des moyens d'entraînement de tels matériels.

Dans les installations portuaires, il est connu d'effectuer le transport des marchandises en transit, en particulier quand ces marchandises sont des conteneurs, par des trains de remorques ou semi-remorques attelées à un véhicule tracteur.

Les exploitants veulent limiter l'investissement au strict nécessaire, et attendent à cet effet une véritable polyvalence de leur matériel de manutention. L'immobilisation des véhicules de manutention pour reconditionnement et maintenance doit, de plus, être la plus réduite possible. Le document DE 93 08 802 U1 décrit un véhicule comprenant les caractéristiques du préambule de la revendication 1.

Il est connu de par le document FR 2 919 545 du même déposant un véhicule portuaire comportant plusieurs moyens de réception de modules fonctionnels. Ces modules fonctionnels concernent divers éléments du véhicule, en particulier des modules de remplacement ou de substitution d'un élément de puissance comme un moteur thermique ou électrique, d'un essieu ou encore de moyens de roulement.

Un des problèmes liés à l'exploitation d'une flotte de matériels automoteurs est lié à la durée des immobilisations. Il se pose également le problème de l'adaptation des caractéristiques motrices à la charge transportée et au type de mission envisagée. L'exploitant ne peut se permettre de surdimensionner la puissance des moyens moteurs de son parc, en raison tout d'abord du montant élevé des investissements, et encore en raison du surcoût de consommation énergétique évident en cas d'utilisation de moyens moteurs surdimensionnés.

Aussi l'invention s'attache à poursuivre la démarche conceptuelle entreprise avec le document FR 2 919 545, qui propose une architecture pratique d'utilisation pour effectuer des interventions sur de tels véhicules. Il s'agit donc de trouver des solutions adaptées, et de grande facilité d'utilisation, pour changer rapidement par exemple un bloc moteur, afin d'adapter sa puissance et son couple en fonction de la charge qu'il transporte.

De plus lors d'opérations de maintenance il est nécessaire de pouvoir démonter rapidement ce bloc moteur afin de réduire au maximum le temps d'indisponibilité du véhicule.

Il est encore connu par le document WO 00/27662 un module de motorisation hydraulique qui permet au travers de au travers de diverses connexions adapté à un moteur hydraulique de venir alimenter un véhicule en venant se fixer sur la face avant de ce dernier. Un tel module bien que pratique ne permet pas d'ajuster correctement la puissance nécessaire dans les roulements en fonction de la charge transporte par ledit véhicule ce qui entraîne des surcoût non négligeable de carburant et de d'usure si le véhicule fonctionne à vide. De plus l'emplacement en face avant pose le problème de l'intégration de plusieurs modules équipés d'une autre motorisation dans le véhicule.

On connaît encore par le document GB 2 189 754 un véhicule conçu pour le chargement et le déchargement d'un avion comportant un module de puissance venant s'encastrer, là encore, en face avant du véhicule sous le châssis. Un tel module présente lui aussi les problèmes d'adaptabilité pour l'entraînement des moyens de roulement en fonction de charge. L'on peut remarquer également que la conception et l'emplacement de ce module ne permettent pas de disposer plusieurs modules qui pourraient comprendre diverses motorisations alternatives. Bien évidemment, ce véhicule comportant une puissance inadaptée à sa charge entraîne des frais supplémentaires de carburant et de maintenance.

Par ailleurs, pour solutionner de tels problèmes, il a été prévu dans le document EP 0244 549 un module de pour la motorisation d'un véhicule pour le transport de passager. Un tel module comporte des moyens moteurs, mais également les moyens de roulement intégré et alimenter par ces moyens moteurs. Ce module vient s'installer en face arrière du véhicule et constitue d'ailleurs la partie arrière du véhicule. Un tel module permet ainsi d'adapter la puissance en fonction de la charge. Cependant, un tel module est volumineux, très encombrant et très lourd, de ce fait il ne permet pas un montage/démontage rapide et facile. En effet, le module constituant toute la partie arrière du véhicule il est nécessaire pour son montage ou son démontage d'utiliser des machines de levage. Ainsi, l'adaptabilité s'en trouve réduite.

Dans le document EP 1 329 351, il a été prévu un véhicule électrique de type camion équipé d'une batterie auquel vient s'adjoindre un module comportant un moteur thermique. Un tel module vient se disposer sur le plateau de chargement afin de fournir une puissance complémentaire aux batterie équipant ledit véhicule. Il est bien évident que cette solution n'est pas satisfaisante car, d'une part, le module vient occuper une grande partie de l'espace utile et, d'autre part n'est pas adapté pour les moyens de roulement en fonction de la charge. De plus, l'ajout d'autres modules complémentaires n'est pas possible sans limiter encore la zone de chargement si ce n'est la supprimer complètement.

Enfin, il est connu du document GB 2443 272, un véhicule hybride comportant des modules de chargement détachable qui sont intégrés en face avant dudit véhicule. De tels modules, sont prévus pour fournir une motorisation hybride à ce véhicule afin de pouvoir transporter une charge. L'aspect modulaire que présente ce document n'est utilisé que pour faciliter l'intégration de cette motorisation hybride dans le véhicule. En aucun cas, la puissance n'est adaptée en fonction de la charge. Ainsi, ledit véhicule présente une surconsommation de carburant à vide qui peut engendrer des coûts importants.

L'invention a pour but de pallier les inconvénients de l'état de la technique en proposant un véhicule comprenant un module comprenant un bloc moteur se démontant et se remontant facilement et rapidement sur un véhicule, notamment de type transport portuaire ou similaire.

Ainsi, l'invention concerne un véhicule comprenant des moyens de roulement au sol et un châssis, ledit châssis étant composé d'au moins deux longerons parallèles et des traverses perpendiculaires aux dits longerons, les reliant entre eux, un plateau reposant sur lesdits longerons et conçu apte à recevoir des charges, ledit châssis comportant encore dans sa partie centrale un logement destiné à recevoir verticalement au moins un dispositif modulaire interchangeable de génération de puissance, ledit dispositif se présentant sous la forme d'un bloc fermé parallélépipédique constitué autour d'une structure mécano- soudée d'un fond, de deux panneaux latéraux et de deux panneaux longitudinaux, et comportant :
- des moyens de guidage conçus aptes à coopérer avec des moyens de guidage complémentaires que comporte le logement dudit véhicule ;
- des moyens de verrouillage conçus aptes à coopérer avec des moyens de verrouillage complémentaires que comporte le logement dudit véhicule ; et
- au moins des moyens moteurs conçus aptes à fournir toute ou partie de l'énergie motrice dudit véhicule pour l'entraînement desdits moyens de roulement,
ledit logement est constitué par une ou plusieurs découpes dans ce plateau, ladite ou lesdites découpes étant de forme parallélépipédique complémentaire à celle d'un ou plusieurs modules, de sorte que lorsqu'un module est à l'intérieur du logement, celui-ci ne dépasse par en hauteur de la découpe, afin de ne pas occupé de l'espace utile à la réception d'une charge. Selon encore une autre caractéristique, le dispositif modulaire comporte des moyens de raccordement rapide conçus aptes à permettre sa connexion rapide avec au moins un élément de la chaîne cinématique.
L'invention concerne encore un train de véhicules comportant au moins un véhicule comportant au moins un tel dispositif modulaire.

L'invention procure d'indéniables avantages à l'exploitant. Notamment, l'invention permet d'effectuer des maintenances régulières sur les véhicules en temps masqué et ainsi diminuer les temps d'indisponibilité de chaque véhicule afin d'optimiser la flotte de véhicule. De plus lors d'une utilisation dans le cadre d'une installation portuaire le fait de maîtriser la disponibilité de cette flotte permet de prévoir et d'assurer le chargement et le déchargement d'un navire.

De plus, l'invention autorise la modification rapide et simple de la motorisation du véhicule de transport en fonction de la charge qu'il transporte, ou/et qu'il tracte, ou/et qu'il pousse, à l'aller ou au retour de sa mission. Notamment, une motorisation adaptée en fonction de la charge transportée par le véhicule permet de réaliser une économie de carburant importante. Le dimensionnement correct en puissance et en couple permet d'adapter la configuration du véhicule à sa mission, et notamment de disposer des ressources nécessaires pour démarrer dans toute configuration de côte sur son itinéraire. Ce dimensionnement est particulièrement important quand le véhicule entraîne un train de remorques, car il doit permettre sa totale autonomie lors de tout aléa dans l'accomplissement de la mission. Certains transports en train de remorques nécessitent l'utilisation d'un véhicule frein, et il devient alors aisé d'adapter la motorisation de ce dernier en fonction de la charge présente entre un véhicule tracteur et le véhicule frein.

D'autres caractéristiques et avantages de l'invention ressortiront de la description détaillée qui va suivre des modes de réalisation non limitatifs de l'invention, en référence aux figures annexées dans lesquelles:
- la figure 1 représente un schéma fonctionnel du dispositif selon l'invention;
- les figures 2 à 9 représentent, de façon schématisée, différents véhicules obtenus par combinaison de différents dispositifs selon l'invention, dont la composition sera explicitée plus en détail dans la suite de la description, avec différents véhicules comportant différents moyens de leur chaîne cinématique d'entraînement;

- la figure 10 représente, de façon schématisée et en élévation, un véhicule équipé de dispositifs selon l'invention;
- la figure 11 représente, de façon schématisée et en élévation, un train de véhicules équipés de dispositifs selon l'invention;
- la figure 12 représente, de façon schématisée, partielle, et en perspective, l'installation d'un dispositif modulaire selon l'invention sur un véhicule équipé pour le recevoir;
- la figure 13 représente, de façon schématisée, partielle et en perspective, le dispositif modulaire de la figure 12 dans une autre configuration de réception au niveau d'un véhicule qu'il équipe.

L'invention entre dans le domaine des véhicules à déplacement terrestre, et notamment le domaine des engins motorisés de forte puissance.

Elle concerne plus précisément un véhicule comportant des modules de remplacement ou de substitution amovibles d'un élément de puissance ou de couple d'un véhicule de transport de type véhicule portuaire ou convoi exceptionnel.

L'invention a pour but de proposer un véhicule 100 comportant un dispositif modulaire 1 amovible de génération de puissance permettant, d'une part, une interchangeabilité rapide et facile d'au moins une motorisation d'un véhicule 100 de transport de type portuaire ou similaire et, d'autre part, de faciliter l'accessibilité aux divers éléments que comporte ce dispositif modulaire 1, dans le cas d'une maintenance programmée.

Le dispositif 1 coopère avec, ou est intégré dans, une chaîne cinématique d'entraînement au sol d'un véhicule 100, comportant au moins :
- des moyens moteurs 7, et/ou
- des moyens d'entraînement 12, et/ou
- des moyens de roulement au sol 13.

Selon une variante, les moyens d'entraînement 12 peuvent être intégrés aux moyens moteurs 7.

La chaîne cinématique peut comporter, entre autres les moyens moteurs 7 et les moyens d'entraînement 12, ainsi que des moyens de conversion 8.

Avantageusement, tout ou partie des moyens constituant la chaîne cinématique sont conçus aptes à être raccordés à des moyens de stockage d'énergie 14, ou/et à des moyens de commande 16, ou/et à des moyens de gestion 18 dans le véhicule 100.
Dans tous les cas représentés sur les figures, les moyens de roulement au sol 13 sont intégrés au véhicule 100, mais le dispositif modulaire de génération de puissance selon l'invention peut aussi, dans une variante, comporter au moins un essieu moteur, et alors incorporer de tels moyens de roulement au sol 13.

Préférentiellement le dispositif modulaire 1 comporte encore les moyens moteurs 7, et de préférence les moyens de conversion 8.

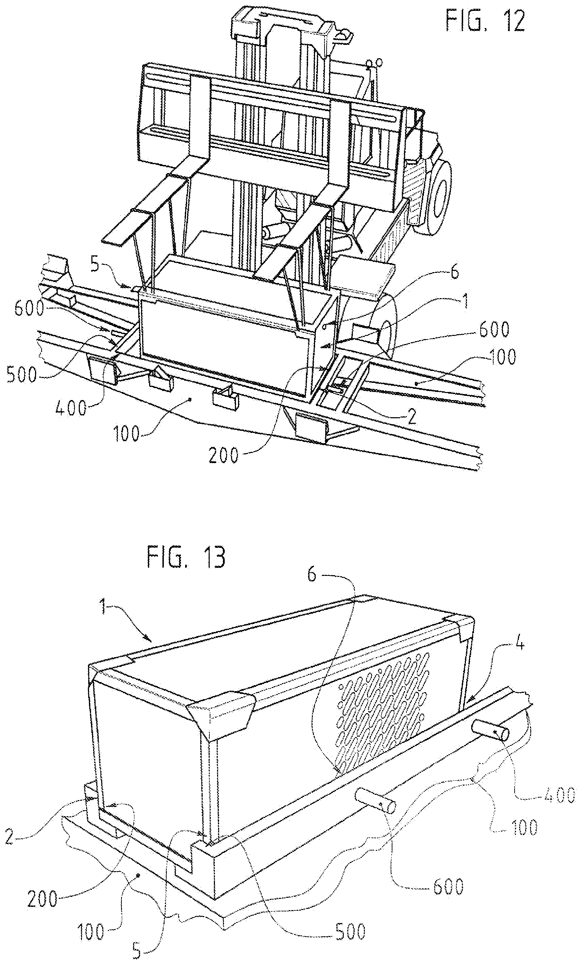

Tel que visible sur la figure 13 le dispositif modulaire 1 se présente de préférence, mais non limitativement, sous la forme d'un bloc fermé, tel un prisme ou similaire comportant des moyens de guidage 2.

Préférentiellement ces moyens de guidage 2 sont disposés au niveau d'au moins une face de ce prisme et sont plus particulièrement constitués par au moins un rail. Une réalisation carénée, fermée par des panneaux formés de tôles, de grillages ou similaires, présente des avantages en termes de sécurité lors de l'introduction ou l'extraction d'un dispositif modulaire 1 par rapport à un véhicule 100, dans la mesure où il n'existe pas de logement ni d'angle rentrant, dans lequel un opérateur pourrait se coincer lors de la manoeuvre.

Selon un mode de réalisation préféré de l'invention, le dispositif modulaire 1 comporte des moyens de positionnement ou/et d'indexation 4, permettant le placement précis de ce dernier sur un véhicule 100. Avantageusement, ces moyens de positionnement ou/et d'indexation 4 sont situés au niveau des moyens de guidage 2, en particulier du rail de guidage.

D'ailleurs, avantageusement couplé à ces moyens de positionnement, le dispositif modulaire 1 peut comporter encore des moyens de butée 5 ou de fin de course permettant d'ajuster correctement et rapidement le dispositif modulaire 1 sur le véhicule 100, par coopération en appui sur des moyens de butée complémentaire 500 que comporte ce dernier.

Les moyens de guidage 2 sont conçus aptes à coopérer avec des moyens de guidage complémentaires 200, de type glissière ou similaire, que comporte un véhicule 100.

Avantageusement l'interaction entre les moyens de guidage 2 du dispositif modulaire 1 et les moyens de guidage complémentaire 200 du véhicule 100, tel une coulisse, permet d'installer ou d'enlever rapidement le dispositif modulaire 1 sur ou hors d'un véhicule 100 selon une direction d'introduction.

Tout particulièrement ce dispositif modulaire 1 de génération de puissance comporte encore des moyens de verrouillage 6, par exemple de type loquets ou broches, conçus aptes à coopérer avec des moyens de verrouillage complémentaire 600 que comporte un véhicule 100. Ces moyens de verrouillage complémentaire 600 assurent, d'une part, une fonction de maintien et, d'autre part et si nécessaire, une fonction de positionnement complémentaire du dispositif modulaire 1 en constituant des moyens de positionnement ou/et d'indexation complémentaire 400 conçus aptes à coopérer avec les moyens de positionnement ou/et d'indexation 4 que comporte ce dernier, en particulier au niveau de ses moyens de guidage 2.

En effet il est avantageux de connaître précisément la position du dispositif modulaire 1 pour permettre un raccordement aisé des éléments de servitude et de raccordement des fluides et des circuits de commande, tout particulièrement si le véhicule 100 comporte des raccordements à géométrie imposée, par exemple au niveau de tubulures rigides, ou/et d'organes mécaniques ou/et hydrauliques ou/et pneumatiques ou/et électriques, ou similaire.

Préférentiellement un tel dispositif modulaire 1 comporte au moins des moyens moteurs 7 conçus aptes à fournir tout ou partie de l'énergie motrice d'un véhicule 100. On comprend notamment qu'un même véhicule 100 peut, dans certaines réalisations particulières, être équipé de plusieurs dispositifs modulaires 1 selon l'invention. Ces moyens moteurs 7 comportent au moins un moteur thermique 11 dimensionné en puissance et en couple en fonction de la charge à transporter par le véhicule 100, et du profil de mission de ce dernier.

Selon une variante préférée de l'invention, les moyens moteurs comportent au moins un moteur thermique 11, conçu apte à entraîner des moyens de conversion 8, de façon à disposer, sur un véhicule 100, d'énergie sous forme fluide, notamment électrique ou hydraulique. Dans ce cas, les moyens de conversion 8 comportent, ou sont conçus aptes à entraîner, ou bien un générateur électrique 9, constitué par exemple par un alternateur, ou bien encore un moteur ou un groupe hydraulique 10, ou un compresseur, ou similaire.

Bien évidemment, le dispositif modulaire 1 est conçu apte à être équipé de moyens de refroidissement et d'alimentation en énergie et en air adaptés pour chaque moyen moteur qu'il comporte, incorporé dans sa structure.
Avantageusement ce dispositif modulaire 1 comporte, de préférence sur au moins une de ses faces, des moyens de raccordement rapide pour permettre une connexion rapide du dispositif modulaire 1 avec au moins un élément de la chaîne cinématique propre au véhicule 100 sur lequel le dispositif modulaire 1 est installé.

Selon un mode de réalisation préférentiel de l'invention, où le dispositif modulaire 1 est réalisé sous forme carénée et prismatique, le prisme se développant selon la direction d'introduction, ces moyens de raccordement peuvent être en saillie, ou bien en retrait, de la face du prisme de manière à permettre un interfaçage pratique entre les moyens moteurs 7 du dispositif modulaire 1 et les éléments extérieurs à ce dernier, constitués soit par un véhicule, soit par des servitudes externes, par exemple des moyens de remplissage en carburant.

Plus particulièrement ces moyens de raccordement peuvent être de type électrique, hydraulique, pneumatique ou encore mécanique.

Selon un mode de réalisation préféré de l'invention le dispositif modulaire 1 comporte des moyens de conversion d'énergie 8. Ces moyens de conversion peuvent, avantageusement, et de façon non limitative, transformer l'énergie mécanique produite par l'énergie thermique :
- de l'énergie mécanique en énergie électrique, ou/et
- de l'énergie mécanique en énergie pneumatique, ou/et
- de l'énergie mécanique en énergie hydraulique, ou/et
- de l'énergie hydraulique en énergie électrique, ou/et
- de l'énergie hydraulique en énergie pneumatique.

D'une manière avantageuse le dispositif modulaire 1 comporte encore des moyens d'entraînement 12 conçus pour entraîner les moyens de roulement au sol 13, constitués par des roues ou des chenilles que comporte un véhicule 100.

Les moyens de conversion 8 ont pour fonction de transformer l'énergie de rotation mécanique, fournie par un moteur thermique 11, en de l'énergie directement utilisable par ces moyens d'entraînement 12. On comprend que les moyens de conversion peuvent comporter différents éléments, boîtes ou ponts mécaniques, convertisseurs, compresseurs, alternateurs, ou similaires.

Selon un mode d'exécution particulier de l'invention, les moyens d'entraînement 12 peuvent être déportés au voisinage ou dans lesdites roues ou chenilles du véhicule, sous forme de moteurs-roues, soit hydrauliques soit électriques pour les modèles les plus courants.

Ce déplacement des moyens d'entraînement 12 dans les moyens de roulement au sol 13, notamment des roues, permet avantageusement un gain de place et d'une simplification de raccordement du dispositif modulaire 1 au véhicule 100.

Substantiellement ces moyens d'entraînement 12 peuvent être d'une part, alimentés directement par les moyens moteurs thermiques 11 ou hydrauliques 10, et, d'autre part, alimentés par les moyens de conversion 8 fournissant alors soit de l'énergie hydrostatique ou électrique ou pneumatique.

D'une manière avantageuse le dispositif modulaire 1 comporte des moyens de stockage d'énergie 14 pour l'alimentation des moyens moteurs 7, ainsi que pour les moyens de conversion 8 si le dispositif modulaire 1 en comporte. Ces moyens de stockage d'énergie 14 peuvent être, notamment, constitués par un réservoir de carburant qui alimente principalement les moyens moteurs thermiques 11, par des batteries emmagasinant ou/et fournissant de l'énergie électrique, par des accumulateurs hydraulique ou encore par des accumulateurs pneumatiques. Ces moyens de stockage d'énergie 14 sont, encore, avantageusement utilisables pour d'autres fonctions du véhicule 100 que les fonctions d'entraînement, notamment les fonctions de freinage, d'assistance à la direction, d'amortissement, d'attelage, d'éclairage, d'alimentation des moyens de commande, de climatisation de cabine, ou similaires.

Ces moyens de stockage d'énergie 14 sont, encore, conçus aptes fournir une énergie alternative au moins aux moyens moteurs 7.

Ces moyens de stockage d'énergie 14 permettent encore, en étant couplés aux moyens moteurs 7 d'utiliser une technologie « arrêt moteur et redémarrage» mise au point par le même déposant et ayant fait l'objet de la demande de brevet FR 09 03098 et qui permet le redémarrage de moyens moteurs mis à l'arrêt au préalable, sous l'effet de la détente d'un fluide comprimé au préalable, qui permet l'arrêt des moyens moteurs les plus consommateurs d'énergie notamment lors des opérations de chargement et de déchargement du véhicule, permettant ainsi de réaliser une économie sur le carburant utilisé durant un cycle de chargement/déchargement.

Avantageusement le dispositif modulaire 1 comporte pour les moyens moteurs 7, les moyens de conversion 8, les moyens d'entraînement 12 et les moyens de stockage d'énergie 14, des moyens de régulation 15, centralisés, ou de préférence propres à chacun de ces moyens, pour mesurer les paramètres de fonctionnement et réguler le fonctionnement de ces différents moyens. Ces moyens de régulation 15 sont encore capables de stocker des informations concernant ces dits moyens.

Préférentiellement le dispositif modulaire 1 comporte encore des moyens de commande 16 conçus aptes à agir sur les différents moyens de régulation 15 des moyens moteurs 7, des moyens de conversion 8, des moyens d'entraînement 12 et des moyens de stockage d'énergie 14. En effet ces moyens de commande 16 envoient plus particulièrement des signaux de commande à ces moyens de régulation 15 qui effectuent alors les opérations demandées.

Selon un mode préféré de réalisation de l'invention, le dispositif modulaire 1 comporte, intégré à l'intérieur de ce dernier, un sous-module intelligent 17 comportant des moyens de gestion 18 pilotant par l'intermédiaire des moyens de commande 16 les moyens de régulation 15 des différents moyens techniques.

Avantageusement ces moyens de gestion 18 comportent un automate programmable, ou similaire, conçu apte à agir sur les moyens de commande 16. Cet automate peut encore surveiller les différents niveaux et états du véhicule, tels que les niveaux de carburant, de charge de batteries, de pressions de fluides, d'huile, d'eau ou similaire. De plus cet automate est conçu pour calculer la durée de service potentielle du dispositif modulaire 1, et pour générer des alertes telles que alerte maintenance ou défaut du moteur ou similaire.

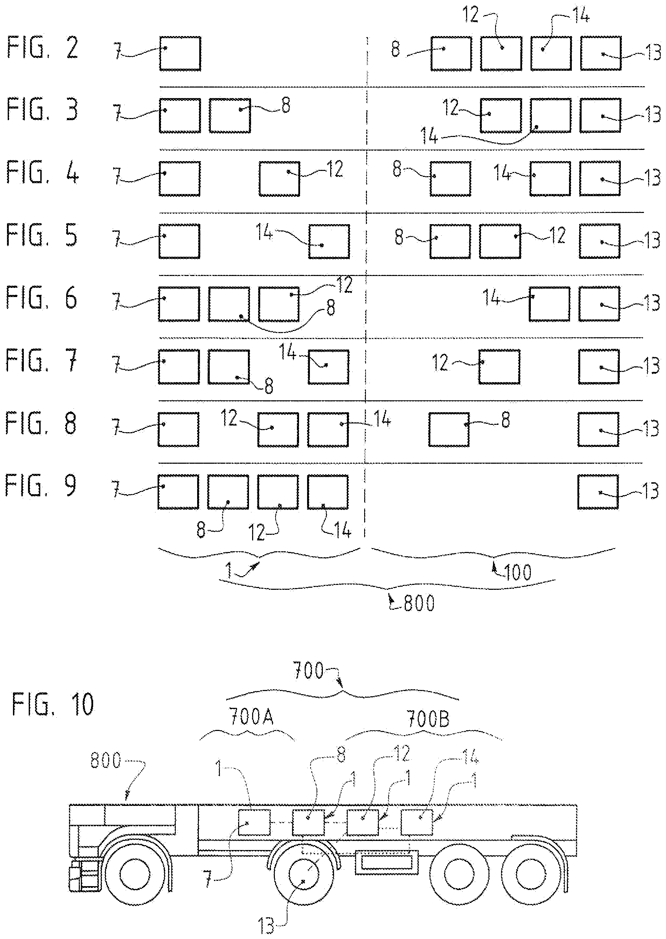

Selon un mode de réalisation visible sur la figure 2 le dispositif modulaire 1 comporte uniquement les moyens moteurs 7, tandis que les moyens de conversion 8, les moyens d'entraînement 12, les moyens de stockage 14 et les moyens de roulement au sol 13 sont sur le véhicule 100.

Selon un mode de réalisation visible sur la figure 3 le dispositif modulaire 1 comporte les moyens moteurs 7 et les moyens de conversion 8, tandis que les moyens d'entraînement 12, les moyens de stockage 14 et les moyens de roulement au sol 13 sont sur le véhicule 100.

Selon un mode de réalisation visible sur la figure 4 le dispositif modulaire 1 comporte les moyens moteurs 7 et les moyens d'entraînement 12, tandis que les moyens de conversion 8, les moyens de stockage 14 et les moyens de roulement au sol 13 sur le véhicule 100.

Selon un mode de réalisation visible sur la figure 5 le dispositif modulaire 1 comporte les moyens moteurs 7 et les moyens de stockage 14, tandis que les moyens de conversion 8, les moyens d'entraînement 12 et les moyens de roulement au sol 13 sont sur le véhicule 100.

Selon un mode de réalisation visible sur la figure 6 le dispositif modulaire 1 comporte les moyens moteurs 7, les moyens de conversion 8 et les moyens d'entraînement 12, tandis que, les moyens de stockage 14 et les moyens de roulement au sol 13 sont sur le véhicule 100.

Selon un mode de réalisation visible sur la figure 7 le dispositif modulaire 1 comporte les moyens moteurs 7 et les moyens de conversion 8 et les moyens de stockage 14, tandis que les moyens d'entraînement 12 et les moyens de roulement au sol 13 sont sur le véhicule 100.

Selon un mode de réalisation visible sur la figure 8 le dispositif modulaire 1 comporte les moyens moteurs 7, les moyens d'entraînement 12 et les moyens de stockage 14, tandis que les moyens de conversion 8 et les moyens de roulement au sol 13 sont sur le véhicule 100.

Selon un mode de réalisation visible sur la figure 9 le dispositif modulaire 1 comporte les moyens moteurs 7, les moyens de conversion 8, les moyens d'entraînement 12 et les moyens de stockage 14, tandis que, uniquement, les moyens de roulement au sol 13 sont sur le véhicule 100.

Pour en revenir à la chaîne cinématique 700, cette dernière se situe entre des moyens moteurs 7 et des moyens de roulement 13.

Préférentiellement le dispositif modulaire 1 comporte au moins la partie amont 700A comprenant des moyens moteurs 7, d'une telle chaîne cinématique 700. Le véhicule 100 comporte quant à lui au moins la partie aval 700B comprenant des moyens de roulement au sol 13, d'une telle chaîne cinématique.

Tel que visible sur la figure 10, un véhicule équipé 800 comporte un tel véhicule 100, et au moins un dispositif modulaire 1 constituant une telle partie amont 700A.

Ce véhicule équipée 800 peut encore comporter d'autres dispositifs modulaires 1, lesquels comportent d'autres éléments d'une telle chaîne cinématique 700, sans nécessairement comporter des moyens moteurs 7. Ce véhicule équipée 800 peut encore comporter d'autres dispositifs modulaires 1 pour des fonctions sans relation avec l'entraînement au sol du véhicule, telles que le maintien en appui au sol, le levage, le réglage de moyens d'amortissement, de freinage ou similaire.

On comprend bien que des dispositifs modulaires 1 peuvent comporter, chacun tout ou partie des moyens moteurs 7, des moyens de conversion 8, des moyens d'entraînement 12, des moyens de stockage 14, et comportent avantageusement des moyens de liaison entre eux, notamment pour établir une chaîne cinématique 700, par des accouplements, embrayages, couplages, connexions ou similaire.

Là encore on comprend que, dans une architecture de chaîne cinématique 700, comprenant des moyens moteurs 7, des moyens de conversion 8, des moyens d'entraînement 12, des moyens de stockage 14, et des moyens de roulement au sol 13, ces différents moyens doivent être raccordés ou accouplés les uns aux autres pour assurer le transfert d'énergie :
depuis les moyens moteurs 7 ou depuis les moyens de stockage 14, vers les moyens de roulement au sol 13 ;
depuis les moyens de roulement au sol 13 vers les moyens de stockage d'énergie 14.

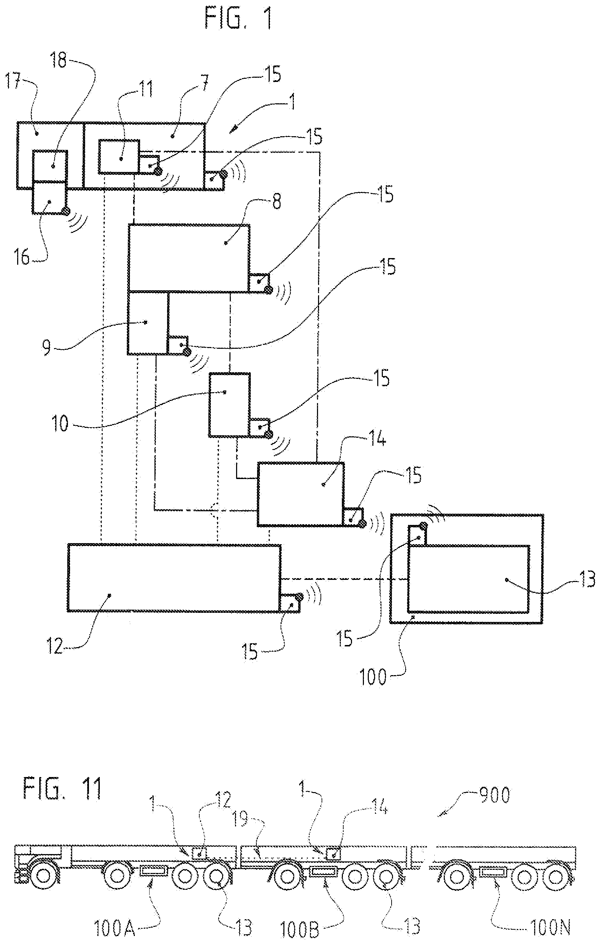

Tel que visible sur la figure 11, cette dernière configuration peut être particulièrement intéressante pour l'équipement de véhicules 100B à 100N incorporés à un train 900 de véhicules tracté par un tracteur 100A comportant lui-même au moins un dispositif modulaire 1 selon l'invention.

Lors du roulement du train 900 de véhicules, l'énergie emmagasinée dans des moyens de stockage 14 que comporte un des véhicules constituant ce train 900 peut être utilisée, soit par ce même véhicule s'il comporte également des moyens d'entraînement 12, soit par un autre véhicule du même train 900, qui comporte lui-même de tels moyens d'entraînement 12, et auquel le véhicule précédent est raccordé par des moyens de raccordement d'énergie 19.

Pour en revenir à la forme du dispositif modulaire 1, il se présente de préférence sous la forme d'un bloc fermé de type prismatique, notamment parallélépipédique. Ce bloc comporte, de préférence autour d'une structure mécano-soudée ou assemblée, un fond, deux panneaux latéraux et deux panneaux longitudinaux comportant notamment des éléments de fermeture réalisés en alliage d'aluminium. L'ensemble étant assemblé par emboîtement ou similaire.

Avantageusement les panneaux longitudinaux comportent des orifices d'aération pour faciliter la dissipation de chaleur produite par les moyens moteurs 7 dudit dispositif modulaire 1. Toutefois ce dernier peut aussi incorporer des moyens de transfert calorifique pour assurer par exemple la climatisation de la cabine du véhicule, effectuer un préchauffage de certains organes, du dégivrage, ou similaire.

Tout particulièrement ce bloc comprend sur sa face supérieure un panneau de dessus amovible permettant d'accéder facilement et rapidement à l'intérieur du dispositif modulaire 1 pour effectuer une maintenance des moyens que comporte ce dernier.

Préférentiellement ce panneau de dessus comporte sur sa face supérieure une surface de circulation de personnes pour permettre le passage d'un opérateur.

La réalisation préférée de la figure 12 concerne un véhicule 100 particulier, qui est équipé, dans la partie centrale de son châssis, d'un logement comportant, sur au moins deux parties latérales, des moyens de guidage complémentaire 200 pour recevoir un dispositif modulaire 1 selon l'invention.

A ce propos, l'on observera qu'un tel châssis est composé d'au moins deux longerons parallèle et des traverses perpendiculaires aux dits longerons et les reliant entre eux. Sur lesdits longerons repose un plateau conçu apte à recevoir des charges telles que des conteneurs généralement utilisé dans le domaine portuaires. La partie entre les longerons forme la partie centrale du châssis qui est la plus fortement dimensionnée pour résister aux contraintes, notamment de flexion, dues à la charge emportée et dont le centre de gravité est situé au-dessus de ce logement.

Ainsi, ce logement est ménagé dans le plateau qui est disposé sur les longerons et qui reçoit la charge. Plus particulièrement, ce logement est constitué par une ou plusieurs découpes, notamment de forme parallélépipédique complémentaire à celle d'un ou plusieurs modules, dans ce plateau permettant ainsi d'installer un ou plusieurs modules 1. Ainsi, lorsqu'un module est à l'intérieure du logement, celui-ci ne dépasse par en hauteur, de la découpe, afin de ne pas occupé de l'espace utile à la réception d'une charge. C'est également le cas si plusieurs modules sont installés.

Selon une variante de l'invention le ou les logements peuvent être refermés par une plaque en tôle de manière à protéger les dispositifs modulaires 1 installés.

Par conséquent, on comprend que le dispositif modulaire 1 est très aisément posé ou déposé verticalement, par exemple par un chariot élévateur, une grue ou similaire. Le châssis constitue ou comporte des moyens de butée complémentaire 500, tandis que le dispositif modulaire 1 comporte au moins une butée 5, par exemple sous la forme d'au moins une forte cornière ou similaire. L'échange peut être ainsi réalisé en moins de 5 minutes.

Dans un mode préférentiel thermique-hydraulique, le dispositif modulaire 1 comporte des moyens moteurs 7 comportant au moins des moyens moteurs thermiques 11 couplés avec au moins un moteur hydraulique, ce dernier et les moyens de couplage constituant des moyens de conversion 8 alimentant en énergie hydraulique des moyens d'entraînement 12 constitués de moteurs-roues hydrostatiques. Selon la technologie « arrêt moteur et redémarrage» du même déposant, objet de la demande de brevet FR 09 03098, le dispositif modulaire 1 comporte un dispositif de démarrage couplé à ce moteur hydraulique, de manière à restituer l'énergie hydraulique accumulée vers les moyens moteurs thermique 11, au travers du moteur hydraulique. Ce dispositif de démarrage comporte des moyens hydrauliques d'accumulation d'énergie par compression d'un fluide hydraulique, qui sont pourvus, d'une part, de moyens de connexion destinés à se coupler avec le moteur et, d'autre part, de moyens de contrôle de la restitution de l'énergie accumulée. Ces derniers comprennent des moyens de mesure de la pression accumulée et des moyens complémentaires d'approvisionnement en fluide et de maintien sous pression des moyens d'accumulation. Les moyens d'approvisionnement comprennent au moins un clapet anti-retour depuis les moyens d'accumulation. Le couplage s'effectue au travers de moyens de connexion sur un vilebrequin que comporte un des moyens moteurs thermiques 11 de sorte que la restitution d'énergie actionne en rotation ce vilebrequin, et assure le redémarrage du moteur concerné.

Dans un mode préférentiel thermique-électrique, le dispositif modulaire 1 comporte des moyens moteurs 7 comportant au moins des moyens moteurs thermiques 11 couplés avec au moins alternateur, ce dernier et les moyens de couplage constituant des moyens de conversion 8 alimentant en énergie électrique des moyens d'entraînement 12 constitués de moteurs-roues électriques.

Les opérations de maintenance sont font de manière plus aisée, puisque le dispositif modulaire 1 est hors du véhicule lors de ces opérations.

Avantageusement ce dispositif modulaire 1 permet encore d'optimiser l'espace de stockage nécessaire aux pièces de rechange, car uniquement des dispositifs modulaires 1 sont stockés sur place, favorisant un remplacement rapide.

Substantiellement le prisme comporte, au niveau du coin des arêtes des moyens de renfort et de rigidification permettant d'assurer une solidité et une résistance aux chocs de ce dernier.

Ce dispositif 1 permet donc d'optimiser le temps de disponibilité de chaque véhicule 100, ainsi que les opérations s'effectuant d'une part, en temps masqué et, d'autre part, hors du véhicule 100. De plus ce dispositif améliore le stockage des pièces de rechange car il suffit de changer uniquement le dispositif 1 et non une pièce bien précise. Zn ce dispositif modulaire 1 permet se change rapidement et facilement en fonction de la charge à supporter ou lors d'une opération de maintenance.

L'invention concerne encore un véhicule 100 comportant au moins un tel dispositif modulaire 1.

L'invention concerne encore un train 900 de véhicules comportant au moins un véhicule 100 comportant au moins un tel dispositif modulaire 1.

## Revendications

1. Véhicule (100) comprenant des moyens de roulement au sol (13) et un châssis, ledit châssis étant composé d'au moins deux longerons parallèles et des traverses perpendiculaires aux dits longerons, les reliant entre eux, un plateau reposant sur lesdits longerons et conçu apte à recevoir des charges, ledit châssis comportant encore dans sa partie centrale un logement destiné à recevoir verticalement au moins un dispositif modulaire (1) interchangeable de génération de puissance, ledit dispositif se présentant sous la forme d'un bloc fermé parallélépipédique constitué autour d'une structure mécano-soudée d'un fond, de deux panneaux latéraux et de deux panneaux longitudinaux, et comportant :
- des moyens de guidage (2) conçus aptes à coopérer avec des moyens de guidage complémentaires (200) que comporte le logement dudit véhicule (100) ;
- des moyens de verrouillage (6) conçus aptes à coopérer avec des moyens de verrouillage complémentaires (600) que comporte le logement dudit véhicule (100) ; et
- au moins des moyens moteurs (7) conçus aptes à fournir toute ou partie de l'énergie motrice dudit véhicule (100) pour l'entraînement desdits moyens de roulement,
**caractérisé par le fait que** ledit logement est constitué par une ou plusieurs découpes dans ce plateau, ladite ou lesdites découpes étant de forme parallélépipédique complémentaire à celle d'un ou plusieurs modules, de sorte que lorsqu'un module est à l'intérieur du logement, celui-ci ne dépasse par en hauteur de la découpe, afin de ne pas occupé de l'espace utile à la réception d'une charge.

2. Véhicule selon la revendication 1, **caractérisé par le fait que** ledit dispositif modulaire (1) est conçu apte à entraîner des moyens de roulement au sol (13) que comporte ledit véhicule (100).

3. Véhicule selon l'une quelconque des revendications précédentes, **caractérisé par le fait que** les moyens moteurs (7) comportent au moins un moteur thermique (11) dimensionné en puissance et en couple en fonction de la charge à transporter par ledit véhicule (100), et du profil de mission de ce dernier.

4. Véhicule selon l'une quelconque des revendications précédentes, **caractérisé par le fait que** ledit dispositif modulaire (1) comporte des moyens de conversion d'énergie (8) conçus aptes à transformer l'énergie mécanique produite par l'énergie thermique :
- de l'énergie mécanique en énergie électrique, ou/et
- de l'énergie mécanique en énergie pneumatique, ou/et
- de l'énergie mécanique en énergie hydraulique, ou/et
- de l'énergie hydraulique en énergie électrique ou encore, ou/et
- de l'énergie hydraulique en énergie pneumatique.

5. Véhicule selon l'une quelconque des revendications précédentes, **caractérisé par le fait que** ledit dispositif modulaire (1) comporte des moyens d'entraînement (12) conçus aptes à entraîner des moyens de roulement au sol (13) tels que des roues ou des chenilles.

6. Véhicule selon la revendication 3 précédentes, **caractérisé par le fait que** ledit dispositif modulaire (1) comporte des moyens de stockage d'énergie (14) pour fournir une énergie alternative au moins aux dits moyens moteurs (7).

7. Véhicule selon l'une quelconque des revendications précédentes, **caractérisé par le fait que** ledit dispositif modulaire (1) comporte des moyens de régulation (15) conçus aptes à réguler au moins lesdits moyens moteurs (7).

8. Véhicule selon la revendication précédente, **caractérisé par le fait que** ledit dispositif modulaire (1) comporte des moyens de commande (16) conçus aptes à agir sur lesdits moyens de régulation (15) pour commander les moyens moteurs (7) et/ou les moyens de conversion (8), et/ou les moyens d'entraînement (12) et/ou les moyens de stockage d'énergie (14).

9. Véhicule selon la revendication 8, **caractérisé par le fait que** le dispositif modulaire (1) comporte des moyens de gestion (18) conçus aptes à piloter lesdits moyens de régulation (15) et/ou les moyens de commande (16) pour commander les .moyens moteurs (7) et/ou les moyens de conversion (8), et/ou les moyens d'entraînement (12) et/ou les moyens de stockage d'énergie (14).

10. Véhicule selon l'une quelconque des revendications précédentes, **caractérisé par le fait que** le dispositif modulaire (1) comporte les moyens moteurs (7), les moyens de conversion (8), les moyens d'entraînement (12) et les moyens de stockage d'énergie (14).

## Patentansprüche

1. Fahrzeug (100), umfassend Bodenrollen (13) und eine Karosserie, wobei die Karosserie aus mindestens zwei parallelen Stringern und senkrecht zu diesen Stringern angeordneten Traversen, die diese miteinander verbinden, einer auf den Stringern angeordneten Platte, die geeignet ist, Lasten aufzunehmen, besteht, wobei die Karosserie im mittleren Teil ferner ein Gehäuse zur vertikalen Aufnahme von mindestens einem austauschbaren modularen (1) Energieerzeuger, wobei der Energieerzeuger in Form eines geschlossenen parallelflachen Blocks vorliegt, der um eine geschweißte Struktur ausgebildet ist, die aus einem Boden, zwei Seitenplatten und zwei Längsplatten besteht, und umfasst:
- Führungsmittel (2), die geeignet sind, mit ergänzenden Führungsmitteln (200) des Gehäuses des Fahrzeugs (100) zusammenzuwirken,
- Schließeinrichtungen (6), die geeignet sind, mit ergänzenden Schließeinrichtungen (600) des Gehäuses des Fahrzeugs (100) zusammenzuwirken,
- mindestens zwei Antriebsmittel (7), die geeignet sind, die Antriebsenergie des Fahrzeugs (100) ganz oder teilweise bereitzustellen, um die Rollen anzutreiben,
**dadurch gekennzeichnet, dass** das Gehäuse aus mindestens einem Zuschnitt in der Platte besteht, wobei der mindestens eine Zuschnitt parallelflach sind und der Form nach der Form eines oder mehrerer Module entsprechen, so dass wenn sich ein Modul im Gehäuse befindet, dieses über die Höhe des Zuschnitts nicht hinausgeht, um keinen zur Aufnahme einer Last nutzbaren Raum zu belegen.

2. Fahrzeug nach Anspruch 1, **dadurch gekennzeichnet, dass** die modulare Vorrichtung (1) geeignet ist, Bodenrollen (13) des Fahrzeugs (100) anzutreiben.

3. Fahrzeug nach einem der vorstehenden Ansprüche, **dadurch gekennzeichnet, dass** die Antriebsmittel (7) mindestens einen Verbrennungsmotor (11) umfassen, dessen Leistung und Drehmoment der vom Fahrzeug (100) zu befördernden Last und den Aufgaben des Fahrzeugs entsprechen.

4. Fahrzeug nach einem der vorstehenden Ansprüche, **dadurch gekennzeichnet, dass** die modulare Vorrichtung (1) Energieumwandlungsmittel (8) umfasst, die geeignet sind, die von der Wärmeenergie erzeugte mechanische Energie umzuwandeln:
- von mechanischer in elektrische Energie und/oder
- von mechanischer in pneumatische Energie und/oder
- von mechanischer in Wasserenergie und/oder
- von Wasserenergie in elektrische Energie und/oder
- von Wasserenergie in pneumatische Energie.

5. Fahrzeug nach einem der vorstehenden Ansprüche, **dadurch gekennzeichnet, dass** die modulare Vorrichtung (1) Antriebsmittel (12) umfasst, die geeignet sind, die Bodenrollen (13) wie z.B. Räder oder Raupen anzutreiben.

6. Fahrzeug nach Anspruch 3, **dadurch gekennzeichnet, dass** die modulare Vorrichtung (1) Energiespeichermittel (14) umfasst, um mindestens den Antriebsmitteln (7) eine alternative Energie zuzuführen.

7. Fahrzeug nach einem der vorstehenden Ansprüche, **dadurch gekennzeichnet, dass** die modulare Vorrichtung (1) Regelungsmittel (15) umfasst, die geeignet sind, mindestens die Antriebsmittel (7) zu regeln.

8. Fahrzeug nach dem vorstehenden Anspruch, **dadurch gekennzeichnet, dass** die modulare Vorrichtung (1) Steuerungsmittel (16) umfasst, die geeignet sind, auf die Regelungsmittel (15) einzuwirken, um die Antriebsmittel (7) und/oder die Umwandlungsmittel (8) und/oder die Antriebsmittel (12) und/oder die Energiespeicherungsmittel (14) zu steuern.

9. Fahrzeug nach Anspruch 8, **dadurch gekennzeichnet, dass** die modulare Vorrichtung (1) Verwaltungsmittel (18) umfasst, die geeignet sind, die Regelungsmittel (15) und/oder die Steuerungsmittel (16) zu steuern, um die Antriebsmittel (7) und/oder die Umwandlungsmittel (8) und/oder die Antriebsmittel (12) und/oder die Energiespeicherungsmittel (14) zu steuern.

10. Fahrzeug nach einem der vorstehenden Ansprüche, **dadurch gekennzeichnet, dass** die modulare Vorrichtung (1) die Antriebsmittel (7), die Umwandlungsmittel (8), die Antriebsmittel (12) und die Energiespeicherungsmittel (14) umfasst.

## Claims

1. Vehicle (100) comprising means for rolling on the ground (13) and a chassis being composed of at least two parallel longitudinal members and crosspieces perpendicular to said longitudinal members, connecting them to each other, a plate resting on said longitudinal members and designed to receive loads, said chassis further comprising, in its central portion, a recess aimed at receiving vertically at least one interchangeable modular power-generating device (1), said device being in the form of a closed parallelepipedic block formed around a tack welded structure comprised of a bottom, two side panels and two longitudinal panels, and including:
- guiding means (2) designed capable of cooperating with complementary guiding means (200) the recess of said vehicle (100) includes;
- locking means (6) designed capable of cooperating with complementary locking means (600) the recess of said vehicle (100) includes; and
- at least motor means (7) designed capable of providing all or part of the driving energy of said vehicle (100) for driving said rolling means,
**characterized in that** said recess is constituted by one or more cut-outs in this plate, said cut or cuttings being of parallelepiped shape complementary to that of one or more modules, so that when a module is inside a recess, the latter does not exceed the height of the cut, in order to not occupy the space required for receiving a load.

2. Vehicle according to claim 1, **characterized in that** said modular device (1) is designed capable of driving means for rolling on the ground (13) said vehicle (100) includes.

3. Vehicle according to any of the preceding claims, **characterized in that** the motor means (7) include at least one thermal engine (11) dimensioned in power and torque depending on the load to be transported by said vehicle (100), and on the profile of the task of the latter.

4. Vehicle according to any of the preceding claims, **characterized in that** said modular device (1) includes energy-conversion means (8) designed capable of converting the mechanical energy produced by the thermal energy:
- from mechanical energy into electric energy, or/and
- from mechanical energy into pneumatic energy, or/and
- from mechanical energy into hydraulic energy, or/and
- from hydraulic energy into electric energy, or even
- from hydraulic energy into pneumatic energy.

5. Vehicle according to any of the preceding claims, **characterized in that** said modular device (1) includes driving means (12) designed capable of driving means for rolling on the ground (13) such as wheels or caterpillars.

6. Vehicle according to the preceding claim 3, **characterized in that** said modular device (1) includes energy-storing means (14) in order to provide an alternative energy at least to said motor means (7).

7. Vehicle according to any of the preceding claims, **characterized in that** said modular device (1) includes regulation means (15) designed capable of regulating at least said motor means (7).

8. Vehicle according to the preceding claim, **characterized in that** said modular device (1) includes control means (16) designed capable of acting on said regulation means (15) in order to control the motor means (7) and/or the conversion means (8), and/or the driving means (12) and/or the energy-storing means (14).

9. Vehicle according to claim 8, **characterized in that** the modular device (1) includes management means (18) designed capable of piloting said regulation means (15) and/or the control means (16) in order to control the motor means (7) and/or the conversion means (8), and/or the driving means (12) and/or the energy-storing means (14).

10. Vehicle according to any of the preceding claims, **characterized in that** the modular device (1) includes the motor means (7), the conversion means (8), the driving means (12) and the energy-storing means (14).
